# EUROPEAN PATENT APPLICATION

(11) **EP 4 553 929 A1**
(43) Date of publication of application: **14.05.2025**
(21) Application number: 23924516.0
(22) Date of filing: 27.02.2023
(51) Int. Cl.: H01M 4/62, H01M 4/64, H01M 50/457

(54) **ELECTRODE ASSEMBLY, BATTERY CELL, BATTERY, AND ELECTRIC APPARATUS**

(71) Applicant: Contemporary Amperex Technology (Hong Kong) Limited, Hong Kong (HK)
(72) Inventor: SUN, Jingxuan, Ningde, Fujian 352100 (CN)
(74) Representative: Kraus & Lederer PartGmbB
(86) International application number: PCT/CN2023/078412
(87) International publication number: WO 2024/178535

(57) **Abstract**

An electrode assembly (100), a battery cell (200), a battery (300), and an electrical device (400) are disclosed. The electrode assembly (100) includes: a positive electrode plate (10) and a negative current collector (20). The positive electrode plate (10) and the negative current collector (20) are stacked along a first direction. At least one of the positive electrode plate (10) or the negative current collector (20) includes a substrate assembly (30). The substrate assembly (30) includes a substrate layer (31) and an elastic layer (32). The substrate layer (31) and the corresponding elastic layer (32) are stacked along the first direction.

## Description

### TECHNICAL FIELD

This application relates to the field of batteries, and in particular, to an electrode assembly, a battery cell, a battery, and an electrical device.

### BACKGROUND

In the related art, a battery cell includes a shell and an electrode assembly. The electrode assembly is disposed in the shell. During charging of the battery, metal (such as lithium, sodium, and potassium) is precipitated/deposited on a negative current collector, thereby causing the electrode assembly to expand in volume. When the volume change rate of the electrode assembly is large, the shell is subjected to large stress when the electrode assembly expands, thereby potentially causing the battery cell to explode, and impairing the service life and safety of the battery cell in use.

### SUMMARY

This application aims to solve at least one of technical problems in the related art. To solve the above problems, one objective of this application is to disclose an electrode assembly. During charging of a battery, an elastic layer of the electrode assembly is compressible to absorb and alleviate the volume expansion of the electrode assembly, reduce the stress on the shell of the battery cell, reduce the risk of explosion of a battery cell, and improve the service life and safety of the battery cell.

This application further discloses a battery cell.

This application further discloses a battery.

This application further discloses an electrical device.

According to a first aspect, an embodiment of this application provides an electrode assembly. The electrode assembly includes a positive electrode plate and a negative current collector. The positive electrode plate and the negative current collector are stacked along a first direction. At least one of the positive electrode plate or the negative current collector includes a substrate assembly. The substrate assembly includes a substrate layer and an elastic layer. The substrate layer and the corresponding elastic layer are stacked along the first direction.

In the above technical solution, an elastic layer is disposed. During charging of a battery, the elastic layer is compressible to absorb and alleviate the volume expansion of the electrode assembly. The elastic layer can absorb the expansion force of the electrode assembly, thereby reducing the stress on the shell of the battery cell, reducing the risk of explosion of a battery cell, and improving the service life and safety of the battery cell.

In some embodiments, along the first direction, the elastic layer is disposed on at least one side of the substrate layer.

In the above technical solution, an elastic layer is disposed on at least one side of the substrate layer. When the positive electrode plate and the negative current collector are stacked along the first direction, the elastic layer can be located between the positive electrode plate and the substrate layer. During charging of the battery cell, the elastic layer can be compressed. The elastic layer can absorb and alleviate the volume expansion of the electrode assembly, thereby reducing the volume expansion stress of the electrode assembly.

In some embodiments, the substrate assembly includes a plurality of substrate layers. The plurality of substrate layers are stacked along the first direction. At least two adjacent substrate layers are interspaced with the elastic layer.

In the above technical solution, two adjacent substrate layers are interspaced with an elastic layer. During charging of the battery cell, a metal ion (such as sodium ion) layer is deposited on a surface of the substrate layer, the surface being away from the elastic layer. After the metal ions are deposited on the surface of the substrate layer, the elastic layer is compressed under the action of the expansion force. The elastic layer can absorb and alleviate the volume expansion of the electrode assembly, thereby reducing the volume expansion stress of the electrode assembly.

In some embodiments, the elastic layer is connected to the adjacent substrate layer.

In the above technical solution, the elastic layer is connected to the substrate layer, so that the elastic layer can be fixed and fitted to the substrate layer, thereby reducing the risk of dislocation of the elastic layer and the substrate layer, and fitting the elastic layer reliably between the substrate layer and the positive electrode plate. During charging of the battery cell, after metal ions are deposited on the surface of the negative current collector, the elastic layer is ensured to be compressed in the first direction under the action of the expansion force, thereby ensuring that the elastic layer can absorb and alleviate the volume expansion of the electrode assembly.

In some embodiments, the elastic layer is bonded and fixed to the adjacent substrate layer.

In the above technical solution, the elastic layer is bonded and fixed to the adjacent substrate layer, so that the elastic layer is fixed to the substrate layer reliably, thereby reducing the risk of detachment of the elastic layer from the substrate layer, and also reducing the risk of dislocation of the elastic layer and the substrate layer. In addition, the elastic layer and the substrate layer being bonded and fixed together can simplify the assembly process of the elastic layer and the substrate layer, and improve the assembly efficiency of the elastic layer and the substrate layer.

In some embodiments, along the first direction, the substrate layer includes a first surface. The elastic layer includes a second surface. The first surface abuts the corresponding second surface.

In the above technical solution, the first surface of the substrate layer abuts the second surface of the elastic layer. During charging of the battery cell, after the metal ions (such as sodium ions) are deposited on the surface of the negative current collector, the expansion force can be transmitted to the elastic layer, and the elastic layer can be compressed. The elastic layer can absorb and alleviate the volume expansion of the electrode assembly, thereby reducing the volume expansion stress of the electrode assembly.

In some embodiments, both the first surface and the second surface are formed into flat surfaces.

In the above technical solution, with both the first surface and the second surface formed into flat surfaces, the first surface and the second surface can be made more even. After the elastic layer and the substrate layer are fitted together, the contact area between the first surface and the second surface can be increased, thereby enabling the first surface to abut the second surface reliably. During charging of the battery cell, after metal ions (such as sodium ions) are deposited on the surface of the negative current collector, the elastic layer can be stressed uniformly, and the elastic layer can be compressed more uniformly, thereby reducing the risk of stress concentration on the elastic layer.

In some embodiments, along the first direction, an orthographic projection of the substrate layer lies within an orthographic projection of the elastic layer.

In the above technical solution, the orthographic projection of the substrate layer lies within the orthographic projection of the elastic layer, and therefore, during charging of the battery cell, after the metal ions (such as sodium ions) are deposited on the surface of the negative current collector, the elastic layer can be compressed, and the expansion force can be transmitted to the elastic layer. The elastic layer can absorb and alleviate the volume expansion of the electrode assembly, thereby reducing the volume expansion stress of the electrode assembly.

In some embodiments, an outer surface of the negative current collector is overlaid with a negative active material layer.

In the above technical solution, a negative electrode plate can be formed by disposing the negative active material layer on the outer surface of the negative current collector, so that the battery cell include a positive electrode plate and a negative electrode plate.

In some embodiments, the elastic layer is a polymer.

In the above technical solution, the elastic layer is made of a polymer, thereby improving the temperature resistance, bonding strength, and corrosion resistance of the elastic layer, and improving the performance of the battery cell.

In some embodiments, a thickness of the substrate layer is 5% to 80% of a total thickness of the substrate assembly, and a thickness of the elastic layer is 20% to 95% of the total thickness of the substrate assembly.

The above technical solution can reduce the space occupied by the elastic layer in an initial uncompressed state, reduce the risk of an adverse effect on the space efficiency of the electrode assembly and the risk of a decline in the energy density. At the same time, the above technical solution ensures enough space available to the elastic layer, increases the compressible space of the elastic layer, and ensures effective absorption of the expansion of the electrode assembly.

In some embodiments, an initial thickness of the elastic layer is D₁, and a thickness of the elastic layer that is compressed is D₂, satisfying: 0.1 ≤ 1 - D₂/D₁ ≤ 0.95.

The above technical solution makes the elastic layer compressible enough. With the expansion of the electrode assembly, the elastic layer can be compressed and deformed to absorb the expansion of the electrode assembly. The above technical solution also alleviates the processing difficulty caused by the factors such as vulnerability to deformation and rebound due to excessive compressibility during production of the electrode assembly.

In some embodiments, the elastic layer includes a weight-reducing structure.

In the above technical solution, a weight-reducing structure is disposed on the elastic layer, thereby reducing the weight of the elastic layer, reducing the weight of the electrode assembly, and in turn, reducing the weight of the battery cell and facilitating a lightweight design of the battery cell.

In some embodiments, the weight-reducing structure is a weight-reducing hole and/or a weight-reducing groove.

By shaping the weight-reducing structure as a weight-reducing hole and/or a weight-reducing groove, the above technical solution simplifies the weight-reducing structure, makes it convenient to dispose the weight-reducing structure on the elastic layer, and simplifies the elastic layer structure.

In some embodiments, the electrode assembly further includes a separator. The separator is disposed between the positive electrode plate and the negative current collector to separate the positive electrode plate from the negative current collector.

In the above technical solution, with the separator disposed between the positive electrode plate and the negative current collector, the separator can separate the positive electrode plate from the negative current collector, thereby avoiding a short circuit caused by contact between the positive electrode plate and the negative current collector, and improving the safety of the battery cell.

In some embodiments, in a thickness direction of the separator, the separator includes a positive end and a negative end. The positive end is disposed near the positive electrode plate. The negative end is disposed near the negative current collector. The positive end is provided with a plurality of first pores. The negative end is provided with a plurality of second pores. Diameters of the first pores are larger than diameters of the second pores.

In the above technical solution, the separator of this application can solve the problems of the capacity loss and safety hazards of the battery caused by volume expansion of the negative current collector during cycling of the battery.

In some embodiments, the diameters of the first pores are 20 nm to 1000 µm, and preferably 50 nm to 500 µm.

The above technical solution improves the density of the negative end of the separator while improving the electrolyte retention effect at the negative end, thereby solving the problems of capacity loss and safety hazards of the battery caused by volume expansion of the negative current collector during cycling of the battery.

In some embodiments, the diameters of the second pores are 20 nm to 500 µm, and preferably 50 nm to 100 µm.

The above technical solution improves the density of the negative end of the separator while improving the electrolyte retention effect at the negative end, thereby solving the problems of capacity loss and safety hazards of the battery caused by volume expansion of the negative current collector during cycling of the battery.

In some embodiments, the diameters of the pores in the separator increase stepwise along a direction from the negative end to the positive end.

The above technical solution can adjust the concentration gradient of metal ion diffusion during charging of the battery, so that the metal ions are uniformly deposited on the surface of the negative current collector, thereby reducing growth of metal dendrites and the volume expansion of the negative current collector.

In some embodiments, a capillary structure is disposed inside the separator along a height direction of the separator, and one end of the capillary structure is flush with a lowest end of the separator.

In the above technical solution, when the negative current collector expands in volume and squeezes the separator, the electrolyte solution at the bottom of the battery cell can be siphoned into the separator by virtue of a siphon effect of the capillary to supplement the electrolyte solution in a height direction of the separator in time.

In some embodiments, a length H₁ of the capillary structure is greater than or equal to 70%H₂, where H₂ is a height of the separator.

The above technical solution can supplement the electrolyte solution in the height direction of the separator in time.

In some embodiments, a compression modulus of the separator is 5% to 95%.

The above technical solution alleviates the bulging of the battery cell caused by the volume expansion of the negative current collector, thereby improving the safety performance of the battery cell.

In some embodiments, the separator is a sponge base film.

The above technical solution improves the electrolyte retention effect and alleviates the capacity loss of the battery cell.

In some embodiments, the separator includes a sponge base film and a coating. The coating is formed on at least one side of the sponge base film. The capillary structure is disposed in the sponge base film.

The above technical solution improves the electrolyte retention effect and strength of the separator, thereby solving the problems of capacity loss and safety hazards of the battery cell caused by volume expansion of the negative current collector during cycling of the battery.

In some embodiments, the sponge base film includes at least one of glass fiber, nanofiber, polyethylene, polypropylene, or non-woven fabric.

The above technical solution improves the electrolyte retention effect and alleviates the capacity loss of the battery cell.

In some embodiments, the coating is formed on one side of the sponge base film. The second pores are disposed on the coating. The first pores are disposed at one end of the sponge base film, the end being away from the coating.

The above technical solution improves the electrolyte retention effect and strength of the separator, thereby solving the problems of capacity loss and safety hazards of the battery cell caused by volume expansion of the negative current collector during cycling of the battery cell.

In some embodiments, the coating is formed on both sides of the sponge base film. The second pores are disposed on the coating located at the negative end, and the first pores are disposed on the coating located at the positive end.

The above technical solution improves the electrolyte retention effect and strength of the separator, thereby solving the problems of capacity loss and safety hazards of the battery cell caused by volume expansion of the negative current collector during cycling of the battery cell.

In some embodiments, the separator includes a first separator, a middle separator, and a second separator stacked along a thickness direction of the separator. The first pores are disposed on the first separator, and the second pores are disposed on the second separator.

In some embodiments, a pore diameter of the middle separator is larger than the diameters of the first pores or the diameters of the second pores; and/or, a porosity of the middle separator is greater than a porosity of the first separator or the second separator.

The above technical solution improves the electrolyte retention effect of the separator and alleviates the capacity loss of the battery cell.

In some embodiments, the first separator, the middle separator, and the second separator satisfy at least one of the following conditions:
the porosity of the first separator is 30% to 70%;
the pore diameter of the middle separator is 30 nm to 1 µm;
the porosity of the middle separator is 40% to 90%; or
the porosity of the second separator is 30% to 70%.

The above technical solution improves the electrolyte retention effect of the separator and alleviates the capacity loss of the battery cell.

According to a second aspect, an embodiment of this application further provides a battery cell. The battery cell includes the electrode assembly.

According to a third aspect, an embodiment of this application further provides a battery. The battery includes the battery cell.

According to a fourth aspect, an embodiment of this application further provides an electrical device. The electrical device includes the battery.

Additional aspects and advantages of this application will be partly given in the following description, and a part thereof will become evident in the following description or will be learned in the practice of this application.

### BRIEF DESCRIPTION OF DRAWINGS

FIG. 1 is a schematic structural diagram of an electrical device according to an embodiment of this application;
FIG. 2 is a schematic structural diagram of a battery according to an embodiment of this application;
FIG. 3 is a schematic structural diagram of a battery cell according to an embodiment of this application;
FIG. 4 is a schematic structural diagram of an electrode assembly according to some embodiments of this application;
FIG. 5 is a schematic structural diagram of an electrode assembly according to some other embodiments of this application;
FIG. 6 is a schematic structural diagram of a substrate assembly according to some embodiments of this application;
FIG. 7 is a schematic structural diagram of a substrate assembly according to some other embodiments of this application;
FIG. 8 is a schematic structural diagram of a negative current collector overlaid with a negative active material layer on an outer surface according to some embodiments of this application;
FIG. 9 is a schematic structural diagram of a separator according to an embodiment of this application;
FIG. 10 is a schematic structural diagram of a separator according to another embodiment of this application;
FIG. 11 is a schematic structural diagram of a separator according to still another embodiment of this application;
FIG. 12 is a schematic structural diagram of a separator according to still another embodiment of this application;
FIG. 13 is a schematic structural diagram of a separator according to still another embodiment of this application; and
FIG. 14 is a schematic structural diagram of a separator according to still another embodiment of this application.

### DETAILED DESCRIPTION

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application. All other embodiments derived by a person of ordinary skill in the art based on the embodiments of this application without making any creative efforts still fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

In some embodiments of this application, the same reference numeral denotes the same component. For brevity, detailed descriptions of the same component are omitted in a different embodiment. Understandably, dimensions such as thickness, length, and width of various components in some embodiments of this application shown in the drawings, and dimensions such as overall thickness, length, and width of an integrated device are merely illustrative descriptions, but do not constitute any limitation on this application.

"A plurality of" referred to in this application means two or more (including two).

In this application, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as cylindrical, flat, cuboidal or other shapes. The shape of the battery cell is not limited herein. In terms of the packaging form, the battery cell is typically classed into three types: cylindrical battery cell, prismatic battery cell, and pouch-type battery cell. The type of the battery cell is not limited herein.

The battery mentioned in embodiments of this application means a unitary physical module that includes one or more battery cells to provide a higher voltage and a higher capacity. For example, the battery referred to herein may include a battery module, a battery pack, or the like. A battery typically includes a box configured to package one or more battery cells or a plurality of battery modules. The box prevents liquid or other foreign matters from affecting the charging or discharging of the battery cells.

A battery cell includes a shell, an electrode assembly, and an electrolyte solution. The shell is configured to accommodate the electrode assembly and the electrolyte solution. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector, or the negative electrode plate includes a negative current collector and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative current collector may be made of copper, and a negative active material may be carbon, silicon, or the like. To prevent a large electrical current from tripping the circuit, a plurality of positive tabs are stacked together, and a plurality of negative tabs are stacked together.

The separator may be made of a material such as PP (polypropylene, polypropylene) or PE (polyethylene, polyethylene). In addition, the electrode assembly may be of a jelly-roll type structure or a stacked type structure, without being limited herein.

The inventor hereof finds that, during charging of a battery, metal (such as lithium, sodium, and potassium) is precipitated/deposited on a negative current collector, thereby causing the electrode assembly to expand in volume. When the volume change rate of the electrode assembly is large, the shell of the battery cell is subjected to large stress when the electrode assembly expands, thereby potentially causing the battery cell to explode, and impairing the service life and safety of the battery cell in use.

In view of the above factors, in order to solve the problem that the shell of the battery cell is subjected to large stress due to expansion of the electrode assembly, the inventor has designed an electrode assembly through in-depth research. In the electrode assembly, an elastic layer is disposed. During charging of the battery, the elastic layer is compressible to absorb and alleviate the volume expansion of the electrode assembly. The elastic layer can absorb the expansion force of the electrode assembly, thereby reducing the stress on the shell of the battery cell, reducing the risk of explosion of a battery cell, and improving the service life and safety of the battery cell.

The battery disclosed in some embodiments of this application is applicable to, but not limited to, electrical devices such as a vehicle, watercraft, or aircraft. A power supply system of the electrical device may be formed by using the battery thermal management system, battery, and the like disclosed herein, thereby improving the application scope of the battery thermal management system and reducing the difficulty of assembling the battery thermal management system.

An embodiment of this application provides an electrical device powered by a battery. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as game console, electric car toy, electric ship toy, electric airplane toy, and the like. The spacecraft may include airplane, rocket, space shuttle, spaceship, and the like.

For ease of description in the following embodiments, a vehicle is used as an example of the electrical device according to an embodiment of this application.

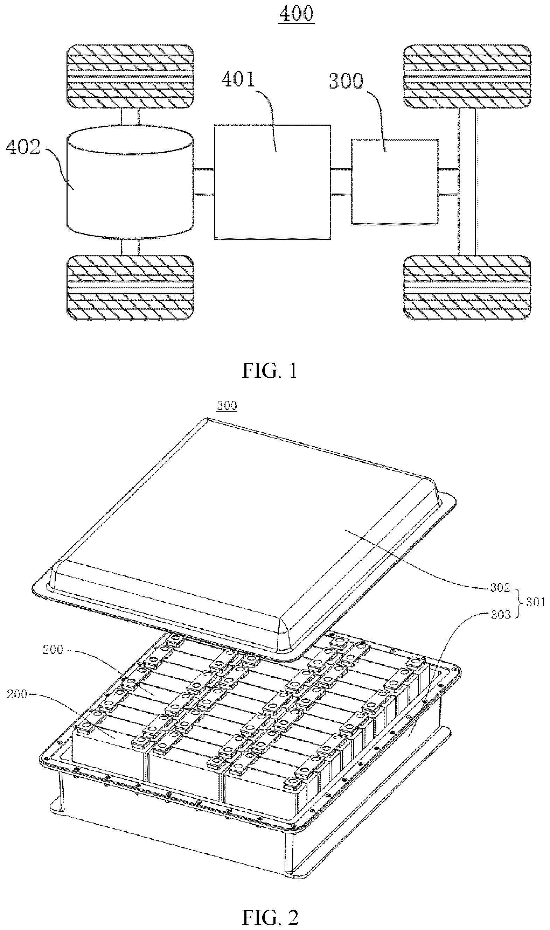

Referring to FIG. 1, FIG. 1 is a schematic structural diagram of a vehicle according to some embodiments of this application. The vehicle may be an internal combustion engine vehicle, a natural gas vehicle, or a new energy vehicle. The new energy vehicle may be a battery electric vehicle, a hybrid electric vehicle, a range-extended electric vehicle, or the like. A battery 300 is disposed inside the vehicle. The battery 300 may be disposed at the bottom, front, or rear of the vehicle. The battery 300 may be configured to supply power to the vehicle. For example, the battery 300 may serve as an operating power supply of the vehicle. The vehicle may further include a controller 401 and a motor 402. The controller 401 is configured to control the battery 300 to supply power to the motor 402, for example, to meet electrical energy requirements in starting, navigating, or running the vehicle.

In some embodiments of this application, the battery 300 serves not only as an operating power supply of the vehicle, but may also serve as a driving power supply of the vehicle to provide driving power for the vehicle in place of or partly in place of fuel oil or natural gas.

Referring to FIG. 2, FIG. 2 is an exploded view of a battery 300 according to some embodiments of this application. The battery 300 includes a box 301 and a plurality of battery cells 200. The battery cells 200 are accommodated in the box 301. The box 301 is configured to provide an assembling space for the battery cell 200. The box 301 may assume various structures. In some embodiments, the box 301 may include a first box body 302 and a second box body 303. The first box body 302 and the second box body 303 fit each other. The first box body 302 and the second box body 303 together define an assembling space configured to accommodate the battery cell 200. The second box body 303 may be a hollow structure opened at one end. The first box body 302 may be a plate-like structure. The first box body 302 fits on an opening of the second box body 303 so that the first box body 302 and the second box body 303 together define the assembling space. Alternatively, both the first box body 302 and the second box body 303 may be hollow structures opened on one side. The opening of the first box body 302 fits the opening of the second box body 303. Definitely, the box 301 formed by the first box body 302 and the second box body 303 may be in various shapes such as a cylinder or a cuboid.

In a battery 300, a plurality of battery cells 200 may be connected in series, parallel, or series-and-parallel pattern. The series-and-parallel pattern means a combination of series connection and parallel connection of the plurality of battery cells 200. The plurality of battery cells 200 may be directly connected in series, parallel, or series-and-parallel pattern, and then the whole of the plurality of battery cells 200 may be accommodated in the box 301. Alternatively, to make up a battery 300, the plurality of battery cells 200 may be connected in series, parallel, or series-and-parallel pattern to form a battery 300 module first, and then a plurality of battery 300 modules are connected in series, parallel, or series-and-parallel pattern to form a whole and accommodated in the box 301. The battery 300 may further include other structures. For example, the battery 300 may further include a busbar component. The busbar component is configured to implement electrical connection between the plurality of battery cells 200.

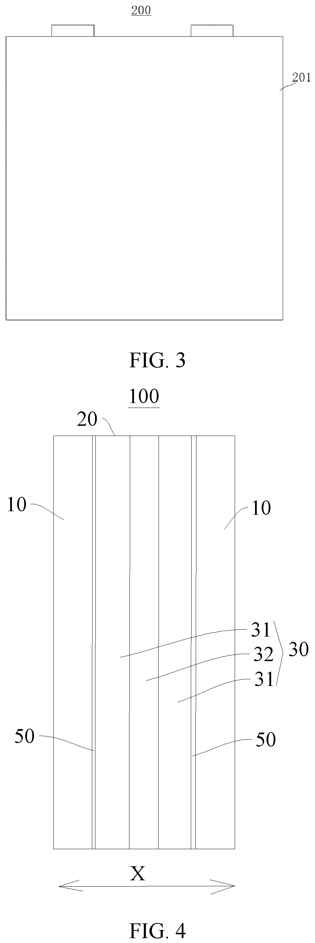

The following describes an electrode assembly 100 according to an embodiment of this application with reference to FIG. 4 to FIG. 8.

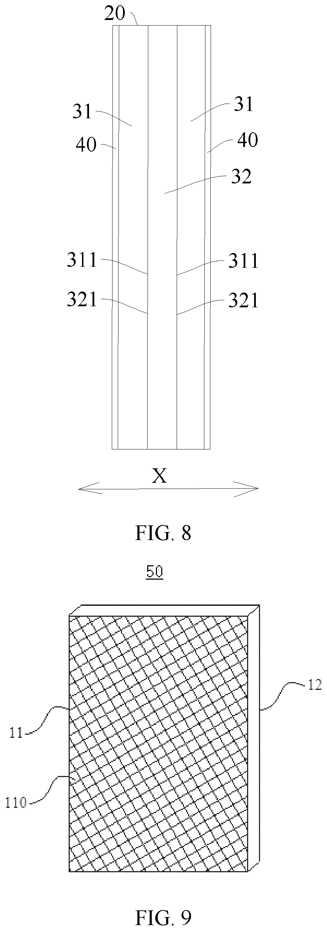

As shown in FIG. 4 and FIG. 8, this application provides an electrode assembly 100. The electrode assembly 100 includes: a positive electrode plate 10 and a negative current collector 20. The positive electrode plate 10 and the negative current collector 20 are stacked along a first direction. At least one of the positive electrode plate 10 or the negative current collector 20 includes a substrate assembly 30. The substrate assembly 30 includes a substrate layer 31 and an elastic layer 32. The substrate layer 31 and the corresponding elastic layer 32 are stacked along the first direction.

The elastic layer 32 is a metal piece. The battery cell 200 includes a shell 201 and an electrode assembly 100. The electrode assembly 100 is mounted in the shell 201. The outer surface of the negative current collector 20 may be coated with a negative active material layer 40. When the outer surface of the negative current collector 20 is coated with a negative active material layer 40, the negative current collector 20 and the negative active material layer 40 constitute a negative electrode plate. Alternatively, the outer surface of the negative current collector 20 may be uncoated with a negative active material layer 40. When the outer surface of the negative current collector 20 is uncoated with a negative active material layer 40, the battery cell 200 is an anode-free battery cell 200. The electrode assembly 100 may assume a jelly-roll structure or a stacked structure. This application is described by using an example in which the electrode assembly 100 is a stacked structure.

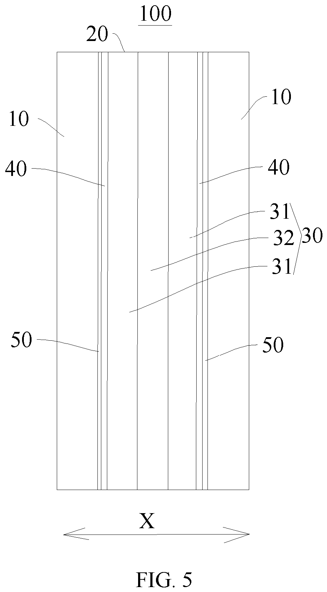

As shown in FIG. 4 and FIG. 5, when the electrode assembly 100 is placed in the direction shown in FIG. 4 and FIG. 5, the first direction means the X direction shown in FIG. 4 and FIG. 5. The positive electrode plate 10 and the negative current collector 20 are stacked along the first direction, and the number of positive electrode plates 10 and the number of negative current collectors 20 may be plural. The plurality of positive electrode plates 10 are arranged in sequence along the first direction, and any two adjacent positive electrode plates 10 are interspaced with the negative current collector 20. The plurality of positive electrode plates 10 and the plurality of negative current collectors 20 are stacked along the first direction. That at least one of the positive electrode plate 10 or the negative current collector 20 includes a substrate assembly 30 may be understood as: the positive electrode plate 10 or the negative current collector 20 includes the substrate assembly 30, or, the positive electrode plate 10 and the negative current collector 20 each include the substrate assembly 30. This application is described by using an example in which the negative current collector 20 includes the substrate assembly 30.

The substrate assembly 30 includes a substrate layer 31 and an elastic layer 32. The substrate layer 31 and the corresponding elastic layer 32 are stacked along the first direction. It is hereby noted that at least one negative current collector 20 includes the substrate assembly 30. This application is described by using an example in which each negative current collector 20 includes the substrate assembly 30. The substrate layer 31 and the elastic layer 32 of each negative current collector 20 are stacked along the first direction. The elastic layer 32 is elastic. When the elastic layer 32 is subjected to a squeezing force, the elastic layer 32 is thinned. When the elastic layer 32 is thinned under the squeezing force, the thickness of the elastic layer 32 gains a tendency to restore the former state due to the elasticity of the elastic layer 32. During charging of the battery cell 200, metal ions (such as sodium ions) are deposited on the surface of the negative current collector 20, thereby causing the electrode assembly 100 to expand in volume. During the expansion of the electrode assembly 100, the elastic layer 32 is compressed, so as to provide a sufficient space in the shell 201 of the battery cell 200 to allow expansion of the electrode assembly 100. The elastic layer 32 can absorb and alleviate the volume expansion of the electrode assembly 100, and the elastic layer 32 can absorb the expansion force of the electrode assembly 100, thereby reducing the stress on the shell 201 of the battery cell 200, reducing the risk of explosion of the battery cell 200, and improving the service life and safety of the battery cell 200. In addition, the elastic layer 32 can reduce the risk of a local break in the flow path of the electrolyte solution in the battery cell 200, and improve the operating performance of the battery cell 200.

In the above technical solution, the elastic layer 32 is disposed. During charging of a battery 300, the elastic layer 32 is compressible to absorb and alleviate the volume expansion of the electrode assembly 100. The elastic layer 32 can absorb the expansion force of the electrode assembly 100, thereby reducing the stress on the shell 201 of the battery cell 200, reducing the risk of explosion of a battery cell 200, and improving the service life and safety of the battery cell 200. In addition, the elastic layer 32 can reduce the risk of a local break in the flow path of the electrolyte solution in the battery cell 200, and improve the operating performance of the battery cell 200.

According to some embodiments of this application, along the first direction, the elastic layer 32 is disposed on at least one side of the substrate layer 31.

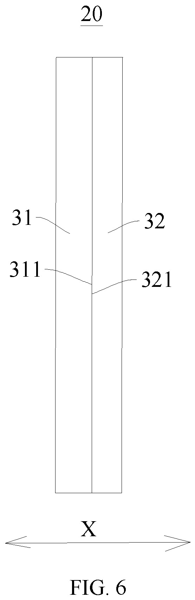

As shown in FIG. 6, along the first direction, the substrate layer 31 includes a first side and a second side opposite to each other. To be specific, the elastic layer 32 is disposed on just the first side of the substrate layer 31, or, the elastic layer 32 is disposed on just the second side of the substrate layer 31, or, the elastic layer 32 is disposed on both the first side and the second side of the substrate layer 31, and in this case, the substrate layer 31 is sandwiched between the two elastic layers 32. This application is described by using an example in which the elastic layer 32 is disposed on one of the first side or the second side of the substrate layer 31.

In the above technical solution, the elastic layer 32 is disposed on at least one side of the substrate layer 31. When the positive electrode plate 10 and the negative current collector 20 are stacked along the first direction, the elastic layer 32 can be located between the positive electrode plate 10 and the substrate layer 31. During charging of the battery cell 200, the elastic layer 32 can be compressed after the metal ions (such as sodium ions) are deposited on the surface of the negative current collector 20. The elastic layer 32 can absorb and alleviate the volume expansion of the electrode assembly 100, thereby reducing the volume expansion stress of the electrode assembly 100.

According to some embodiments of this application, the substrate assembly 30 includes a plurality of substrate layers 31. The plurality of substrate layers 31 are stacked along the first direction. The elastic layer 32 is disposed between at least two adjacent substrate layers 31.

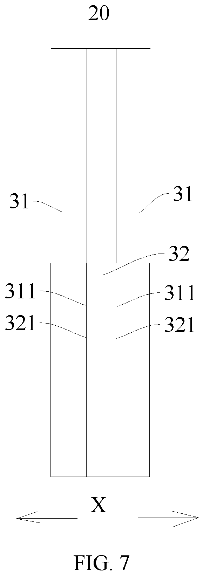

As shown in FIG. 7, each substrate assembly 30 may include a plurality of substrate layers 31. The plurality of substrate layers 31 are stacked along the first direction. At least two adjacent substrate layers 31 are interspaced with the elastic layer 32. For example, each substrate assembly 30 includes two substrate layers 31, and the two substrate layers 31 are interspaced with the elastic layer 32. In this embodiment, the elastic layer 32 is sandwiched between the two substrate layers 31.

In the above technical solution, two adjacent substrate layers 31 are interspaced with an elastic layer 32. During charging of the battery cell 200, a metal ion (such as sodium ion) layer is deposited on a surface of the substrate layer 31, the surface being away from the elastic layer 32. After the metal ions are deposited on the surface of the substrate layer 31, the elastic layer 32 is compressed under the action of the expansion force. The elastic layer 32 can absorb and alleviate the volume expansion of the electrode assembly 100, thereby reducing the volume expansion stress of the electrode assembly 100.

According to some embodiments of this application, the elastic layer 32 is connected to the adjacent substrate layer 31.

To be specific, that the elastic layer 32 is connected to the adjacent substrate layer 31 means that the elastic layer 32 and substrate layer 31 adjacent to each other in each substrate assembly 30 are connected together. The method of connection between the elastic layer 32 and the substrate layer 31 is not specifically limited, as long as the method can connect the elastic layer 32 and the substrate layer 31 together. For example, the elastic layer 32 may be connected to the substrate layer 31 by a snap-fit, or the elastic layer 32 may be connected and fixed to the substrate layer 31 by a fastener.

In the above technical solution, the elastic layer 32 is connected to the substrate layer 31, so that the elastic layer 32 can be fixed and fitted to the substrate layer 31, thereby reducing the risk of dislocation of the elastic layer 32 and the substrate layer 31, and fitting the elastic layer 32 reliably between the substrate layer 31 and the positive electrode plate 10. During charging of the battery cell 200, after metal ions are deposited on the surface of the negative current collector 20, the elastic layer 32 is ensured to be compressed in the first direction under the action of the expansion force, thereby ensuring that the elastic layer 32 can absorb and alleviate the volume expansion of the electrode assembly 100.

According to some embodiments of this application, the elastic layer 32 is bonded and fixed to the adjacent substrate layer 31.

To be specific, the elastic layer 32 may be bonded and fixed to the adjacent substrate layer 31 by a structural adhesive. It is hereby noted that the elastic layer 32 and substrate layer 31 adjacent to each other in each substrate assembly 30 are bonded and fixed together.

In the above technical solution, the elastic layer 32 is bonded and fixed to the adjacent substrate layer 31, so that the elastic layer 32 is fixed to the substrate layer 31 reliably, thereby reducing the risk of detachment of the elastic layer 32 from the substrate layer 31, and also reducing the risk of dislocation of the elastic layer 32 and the substrate layer 31. In addition, the elastic layer 32 and the substrate layer 31 being bonded and fixed together can simplify the assembly process of the elastic layer 32 and the substrate layer 31, and improve the assembly efficiency of the elastic layer 32 and the substrate layer 31.

According to some embodiments of this application, along the first direction, the substrate layer 31 includes a first surface 311. The elastic layer 32 includes a second surface 321. The first surface 311 abuts the corresponding second surface 321.

Along the first direction, the surface, opposite to the elastic layer 32, of the substrate layer 31 is the first surface 311, and the surface, opposite to the substrate layer 31, of the elastic layer 32 is the second surface 321. When the substrate layer 31 and the elastic layer 32 are stacked along the first direction, the first surface 311 abuts the corresponding second surface 321. Specifically, as shown in FIG. 6, in this embodiment, one side of the substrate layer 31 is provided with the elastic layer 32. A surface, opposite to the elastic layer 32, of the substrate layer 31 is the first surface 311, and a surface, opposite to the substrate layer 31, of the elastic layer 32 is the second surface 321. The substrate layer 31 includes one first surface 311, and the elastic layer 32 includes one second surface 321. When the substrate layer 31 and the elastic layer 32 are stacked along the first direction, the first surface 311 and the second surface 321 are disposed opposite to each other, and the first surface 311 abuts the second surface 321. As shown in FIG. 7, in this embodiment, the elastic layer 32 is sandwiched between two adjacent substrate layers 31. The surface, opposite to the elastic layer 32, of each substrate layer 31 is the first surface 311. Each substrate layer 31 includes one first surface 311. The surfaces, opposite to the two adjacent substrate layers 31 respectively, of the elastic layer 32 are second surfaces 321. The elastic layer 32 includes two second surfaces 321. The two second surfaces 321 of the elastic layer 32 are disposed opposite to the first surfaces 311 of the two substrate layers 31 respectively, and each second surface 321 abuts the opposite first surface 311.

In the above technical solution, the first surface 311 of the substrate layer 31 abuts the second surface 321 of the elastic layer 32. During charging of the battery cell 200, after the metal ions (such as sodium ions) are deposited on the surface of the negative current collector 20, the expansion force can be transmitted to the elastic layer 32, and the elastic layer 32 can be compressed. The elastic layer 32 can absorb and alleviate the volume expansion of the electrode assembly 100, thereby reducing the volume expansion stress of the electrode assembly 100.

According to some embodiments of this application, both the first surface 311 and the second surface 321 are formed into flat surfaces.

With both the first surface 311 and the second surface 321 formed into flat surfaces, after the elastic layer 32 is fitted onto the base material layer 31, the elastic layer 32 is in face-to-face contact with the base material layer 31.

In the above technical solution, with both the first surface 311 and the second surface 321 formed into flat surfaces, the first surface 311 and the second surface 321 can be made more even. After the elastic layer 32 and the substrate layer 31 are fitted together, the contact area between the first surface 311 and the second surface 321 can be increased, thereby enabling the first surface 311 to abut the second surface 321 reliably. During charging of the battery cell 200, after metal ions (such as sodium ions) are deposited on the surface of the negative current collector 20, the elastic layer 32 can be stressed uniformly, and the elastic layer 32 can be compressed more uniformly, thereby reducing the risk of stress concentration on the elastic layer 32.

According to some embodiments of this application, along the first direction, an orthographic projection of the substrate layer 31 lies within an orthographic projection of the elastic layer 32.

Along the first direction, that is, along the stacking direction of the positive electrode plate 10 and the negative current collector 20, the orthographic projection of the substrate layer 31 lies within the orthographic projection of the elastic layer 32. It is hereby noted that, the fact that the orthographic projection of the substrate layer 31 lies within the orthographic projection of the elastic layer 32 means: (i) the orthographic projection area of the substrate layer 31 is smaller than the orthographic projection area of the elastic layer 32; or, (ii) the orthographic projection area of the substrate layer 31 is equal to the orthographic projection area of the elastic layer 32, and in this case, the orthographic projection of the substrate layer 31 completely overlaps the orthographic projection of the elastic layer 32.

In the above technical solution, the orthographic projection of the substrate layer 31 lies within the orthographic projection of the elastic layer 32, and therefore, during charging of the battery cell 200, after the metal ions (such as sodium ions) are deposited on the surface of the negative current collector 20, the elastic layer 32 can be compressed, and the expansion force can be transmitted to the elastic layer 32. The elastic layer 32 can absorb and alleviate the volume expansion of the electrode assembly 100, thereby reducing the volume expansion stress of the electrode assembly 100.

According to some embodiments of this application, an outer surface of the negative current collector 20 is overlaid with a negative active material layer 40.

The negative active material layer 40 is disposed on the outer surface of the negative current collector 20. Specifically, the negative active material layer 40 is disposed on the outer surface of the substrate layer 31. The type of the negative active material layer 40 is reasonably selected based on the practical situation, and is not particularly limited herein.

In the above technical solution, a negative electrode plate can be formed by disposing the negative active material layer 40 on the outer surface of the negative current collector 20, so that the battery cell 200 include a positive electrode plate 10 and a negative electrode plate.

According to some embodiments of this application, the elastic layer 32 is a polymer.

The polymer may be one or more of polyethylene terephthalate (PET), polypropylene (PP), polyimide (PI), or the like. It is hereby noted that the polyethylene terephthalate is characterized by higher temperature resistance and higher bonding strength, and the polypropylene is more resistant to corrosion, and is superior in resisting corrosion in the electrolyte solution of the battery cell 200. The non-polar polypropylene substrate is much resistant to acid and alkali, and is ultimately applied to the battery 300 to improve the battery performance.

In the above technical solution, the elastic layer 32 is made of a polymer, thereby improving the temperature resistance, bonding strength, and corrosion resistance of the elastic layer 32, and improving the performance of the battery cell 200.

According to some embodiments of this application, the thickness of the substrate layer 31 is 5% to 80% of a total thickness of the substrate assembly 30, and the thickness of the elastic layer 32 is 20% to 95% of the total thickness of the substrate assembly 30.

When the substrate assembly 30 is unstressed, the thickness of the substrate layer 31 is 5% to 80% of the total thickness of the substrate assembly 30. For example, the thickness of the substrate layer 31 is 5% of the total thickness of the substrate assembly 30, or the thickness of the substrate layer 31 is 80% of the total thickness of the substrate assembly 30, or the thickness of the substrate layer 31 is 50% of the total thickness of the substrate assembly 30. The thickness of the elastic layer 32 is 20% to 95% of the total thickness of the substrate assembly 30. For example, the thickness of the elastic layer 32 is 20% of the total thickness of the substrate assembly 30, or the thickness of the elastic layer 32 is 95% of the total thickness of the substrate assembly 30, or the thickness of the elastic layer 32 is 60% of the total thickness of the substrate assembly 30.

The above technical solution can reduce the space occupied by the elastic layer 32 in an initial uncompressed state, reduce the risk of an adverse effect on the space efficiency of the electrode assembly 100 and the risk of a decline in the energy density. At the same time, the above technical solution ensures enough space available to the elastic layer 32, increases the compressible space of the elastic layer 32, and ensures effective absorption of the expansion of the electrode assembly 100.

According to some embodiments of this application, an initial thickness of the elastic layer 32 is D₁, and a thickness of the elastic layer 32 that is compressed is D₂, satisfying: 0.1 ≤ 1 - D₂/D₁ ≤ 0.95.

The initial thickness of the elastic layer 32 means the thickness of the elastic layer 32 that is in a free state without being compressed, and the thickness of the compressed elastic layer 32 is the thickness of the elastic layer 32 that is compressed by stress. For example, "1-D₂/D₁" is 0.1, or "1-D₂/D₁" is 0.95, or "1-D₂/D₁" is 0.6.

The above technical solution makes the elastic layer 32 compressible enough. With the expansion of the electrode assembly 100, the elastic layer 32 can be compressed and deformed to absorb the expansion of the electrode assembly 100. The above technical solution also alleviates the processing difficulty caused by the factors such as vulnerability to deformation and rebound due to excessive compressibility during production of the electrode assembly 100.

According to some embodiments of this application, the elastic layer 32 includes a weight-reducing structure.

The weight-reducing structure produces a weight-reducing effect. The weight-reducing structure disposed on the elastic layer 32 can reduce the weight of the elastic layer 32.

In the above technical solution, a weight-reducing structure is disposed on the elastic layer 32, thereby reducing the weight of the elastic layer 32, reducing the weight of the electrode assembly 100, and in turn, reducing the weight of the battery cell 200 and facilitating a lightweight design of the battery cell 200.

According to some embodiments of this application, the weight-reducing structure is a weight-reducing hole and/or a weight-reducing groove.

That the weight-reducing structure is a weight-reducing hole and/or a weight-reducing groove may be understood as: the weight-reducing structure is a weight-reducing hole, or, the weight-reducing structure is a weight-reducing groove, or, the weight-reducing structure is both a weight-reducing hole and a weight-reducing groove. The weight-reducing hole may run through the elastic layer 32 along the thickness direction of the elastic layer 32.

By shaping the weight-reducing structure as a weight-reducing hole and/or a weight-reducing groove, the above technical solution simplifies the weight-reducing structure, makes it convenient to dispose the weight-reducing structure on the elastic layer 32, and simplifies the structure of the elastic layer 32.

According to some embodiments of this application, the electrode assembly 100 further includes a separator 50. The separator 50 is disposed between the positive electrode plate 10 and the negative current collector 20 to separate the positive electrode plate 10 from the negative current collector 20.

As shown in FIG. 4 and FIG. 5, the electrode assembly 100 further includes a separator 50. The separator 50 is disposed between the positive electrode plate 10 and the negative current collector 20. The separator 50 can separate the positive electrode plate 10 from the negative current collector 20. The separator 50 allows metal ions to pass through. The separator 50 produces an insulating effect. The specific structure and material of the separator 50 are determined based on the practical situation, and are not particularly limited herein.

In the above technical solution, with the separator 50 disposed between the positive electrode plate 10 and the negative current collector 20, the separator 50 can separate the positive electrode plate 10 from the negative current collector 20, thereby avoiding a short circuit caused by contact between the positive electrode plate 10 and the negative current collector 20, and improving the safety of the battery cell 200.

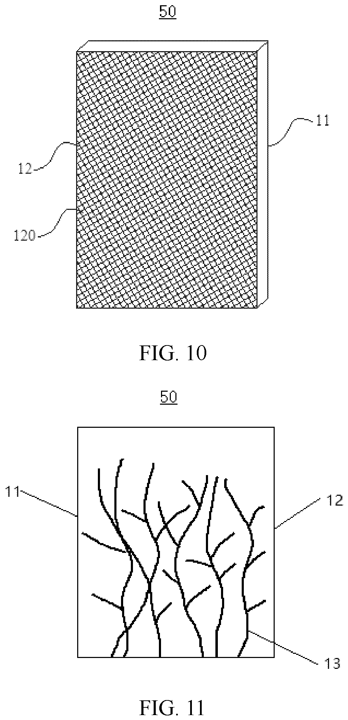

According to some embodiments of this application, referring to FIG. 9 and FIG. 10, in a thickness direction of the separator 50, the separator 50 includes a positive end 11 and a negative end 12. The positive end 11 is disposed near the positive electrode plate 10. The negative end 12 is disposed near the negative current collector 20. The positive end 11 is provided with a plurality of first pores 110. The negative end 12 is provided with a plurality of second pores 120. Diameters of the first pores 110 are larger than diameters of the second pores 120.

It is hereby noted that the "positive end 11 of the separator 50" may be understood as an end of the separator 50, the end being close to the positive electrode plate 10 in a battery cell 200 assembled by stacking the positive electrode plate 10, the separator 50, and the negative current collector 20. Similarly, the "negative end 12 of the separator 50" may be understood as an end of the separator 50, the end being close to the negative current collector 20 in a battery cell 200 assembled by stacking the positive electrode plate 10, the separator 50, and the negative current collector 20. In addition, the phrase "a plurality of" means two or more.

Without intending to be bound by any particular theory, the inventor has found through extensive research that, first pores 110 may be disposed at the positive end 11 of the separator 50, second pores 120 may be disposed at the negative end 12 of the separator 50, and the diameters of the first pores 110 are larger than the diameters of the second pores 120. In this way, on the one hand, during cycling of the battery 300, the negative current collector 20 expands in volume and squeezes the negative end 12 of the separator 50, so that the negative end 12 is compressed more than the positive end 11, thereby making the electrolyte solution prone to be dried up between the negative end 12 of the separator 50 and the negative current collector 20. In this application, small-diameter second pores 120 are disposed on the negative end 12 of the separator 50. The small-diameter second pores 120 produce a good effect of retaining the electrolyte solution, prevent the electrolyte solution from drying up easily between the separator 50 and the negative current collector 20, and in turn, alleviate the capacity loss of the battery 300. On the other hand, the negative end 12 provided with the small-diameter second pores 120 is of good density, thereby reducing the probability that metal dendrites generated on the surface of the negative current collector 20 pierce the separator 50 and cause a short circuit, and in turn, improving the safety of the battery 300. Still on the other hand, the positive end 11 is provided with large-diameter first pores 110, and the negative end 12 is provided with small-diameter second pores 120. During charging of the battery 300, the concentration gradient of metal ion diffusion can be adjusted, so that the metal ions are uniformly deposited on the surface of the negative current collector 20, thereby reducing growth of metal dendrites and the volume expansion of the negative current collector 20, and improving the safety of the battery 300. In this way, the separator 50 of this application can solve the problems of the capacity loss and safety hazards of the battery 300 caused by volume expansion of the negative current collector 20 during cycling of the metal battery 300.

Through in-depth research, the inventor of this application has found that the capacity loss of the battery 300 can be further reduced and the safety performance of the battery 300 can be further improved if the separator 50 of this application further optionally satisfies one or more of the following conditions in addition to the above conditions.

According to some embodiments of this application, the diameters of the first pores 110 are 20 nm to 1000 µm,

for example, 30 nm to 1000 µm, 40 nm to 1000 µm, 50 nm to 1000 µm, 60 nm to 1000 µm, 70 nm to 1000 µm, 80 nm to 1000 µm, 90 nm to 1000 µm, 100 nm to 1000 µm, 200 nm to 1000 µm, 300 nm to 1000 µm, 400 nm to 1000 µm, 500 nm to 1000 µm, 600 nm to 100 0 µm, 700 nm to 1000 µm, 800 nm to 1000 µm, 900 nm to 1000 µm, 1000 nm to 1000 µm, 10 µm to 1000 µm, 50 µm to 900 µm, 100 µm to 800 µm, 150 µm to 750 µm, 200 µm to 700 µm, 250 µm to 650 µm, 300 µm to 600 µm, 350 µm to 550 µm, or 400 µm to 500 µm. The inventor finds that, if the diameters of the first pores 110 are excessively small, the ion conductivity of the positive end 11 will be relatively low; if the diameters of the first pores 110 are excessively large, a large amount of electrolyte solution will be adsorbed at the positive end 11 of the separator 50. When the negative current collector 20 expands in volume and squeezes the separator 50 during charge and discharge, the electrolyte solution adsorbed at the positive end 11 can hardly flow back in time, thereby forming a local break in the flow path of the electrolyte solution, and causing uneven deposition on the surface of the negative current collector 20. In addition, particles such as powder of the active material layer partially shed from the positive electrode plate 10 produce an inevitable adverse effect and give rise to a local micro-short-circuit. In some other embodiments, the diameters of the first pores 110 are preferably 50 nm to 500 µm. That is, the diameters of the first pores 110 at the positive end 11 are 50 nm to 500 µm.

The above technical solution improves the density of the negative end 12 of the separator 50 while improving the electrolyte retention effect at the negative end, thereby solving the problems of capacity loss and safety hazards of the battery 300 caused by volume expansion of the negative current collector 20 during cycling of the battery 300.

According to some embodiments of this application, the diameters of the second pores 120 are 20 nm to 500 µm.

The diameters of the second pores 120 at the negative end 12 of the separator 50 are 20 nm to 500 µm, for example, 30 nm to 500 µm, 40 nm to 500 µm, 50 nm to 500 µm, 60 nm to 500 µm, 70 nm to 500 µm, 80 nm to 500 µm, 90 nm to 500 µm, 100 nm to 500 µm, 200 nm to 500 µm, 300 nm to 500 µm, 400 nm to 500 µm, 500 nm to 500 µm, 600 nm to 500 µm, 700 nm to 500 µm, 800 nm to 500 µm, 900 nm to 500 µm, 1000 nm to 500 µm, 10 µm to 500 µm, 50 µm to 450 µm, 100 µm to 400 µm, 150 µm to 350 µm, or 200 µm to 300 µm. In this way, on the one hand, the second pores 120 with a diameter falling within the above range can improve the electrolyte retention effect at the negative end 12, prevent the electrolyte solution from drying up easily between the separator 50 and the negative current collector 20, and in turn, alleviate the capacity loss of the battery 300. On the other hand, such second pores can improve the density of the negative end 12, thereby reducing the probability that metal dendrites generated on the surface of the negative current collector 20 pierce the separator 50 and cause a short circuit, and in turn, improving the safety of the battery 300. In some other embodiments, the diameters of the second pores 120 are preferably 50 nm to 100 µm. That is, the diameters of the second pores 120 at the negative end 12 are 50 nm to 100 µm.

According to some embodiments of this application, the diameters of the pores in the separator 50 increase stepwise along a direction from the negative end 12 to the positive end 11.

In the above technical solution, the diameters of the pores in the separator 50 increase stepwise along the direction from the negative end 12 to the positive end 11. During charging of the battery 300, the above technical solution can further adjust the concentration gradient of metal ion diffusion, so that the metal ions are uniformly deposited on the surface of the negative current collector 20, thereby reducing growth of metal dendrites and the volume expansion of the negative current collector 20, and improving the safety of the battery 300.

According to some embodiments of this application, a capillary structure 13 is disposed inside the separator 50 along a height direction of the separator, and one end of the capillary structure 13 is flush with a lowest end of the separator 50.

To further improve the electrolyte retention effect of the separator 50, referring to FIG. 11, a capillary structure 13 is disposed inside the separator 50 along the height direction of the separator, and one end of the capillary structure 13 is flush with the lowest end of the separator 50. In this way, when the negative current collector 20 expands in volume and squeezes the separator 50, the electrolyte solution at the bottom of the battery cell 200 can be siphoned into the separator 50 by virtue of a siphon effect of the capillary to supplement the electrolyte solution in the height direction of the separator 50 in time.

According to some embodiments of this application, a length H₁ of the capillary structure 13 is greater than or equal to 70%H₂, where H₂ is the height of the separator 50.

For example, H₁ is 70%H₂, 75%H₂, 80%H₂, 85%H₂, 90%H₂, 95%H₂, or 100%H₂. In this way, the electrolyte solution at the bottom of the battery cell 200 can be siphoned to the upper part of the separator 50 to supplement the electrolyte solution at the upper part of the separator 50 in time.

According to some embodiments of this application, the capillary structure 13 may assume a tree-like structure, for example, a large-pore trunk structure in coordination with a small-pore branch structure. The small-pore branch structure communicates to the large-pore trunk structure, thereby not only siphoning the electrolyte solution at the bottom of the battery cell 200 to the upper layer of the separator 50 through the large-pore trunk structure, but also conveying the electrolyte solution to all layers in the separator 50 through the small-pore branch structure, and in turn, supplementing the electrolyte solution in the separator 50 in time.

According to some embodiments of this application, the compression modulus of the separator 50 is 5% to 95%, for example, 10% to 90%, 20% to 80%, 30% to 70%, 40% to 60%, or 40% to 50%. Therefore, by virtue of the separator 50 with a compression modulus falling within the range specified herein, when the negative current collector 20 expands in volume, the bulging of the battery 300 caused by the volume expansion of the negative current collector 20 can be effectively alleviated, thereby improving the safety performance of the battery 300.

According to some embodiments of this application, the compression modulus of the separator 50 is measured by using a universal tensile tester (MDTC-EQ-M12-01). The measurement method includes the following steps:
Step 1. Select a specimen separator: select separators with a thickness greater than or equal to 1 mm as specimens, where the thickness is determined by stacking a plurality of layers of separators and averaging out the measured values.
Step 2. Obtaining an initial thickness: applying an initial pressure to the separator (the initial pressure value is greater than or equal to 0.05 MPa) to obtain an initial thickness of the separator under this constant pressure.
Step 3. Obtaining a compression modulus: applying a pressure to the separator continuously until the thickness no longer changes and the applied force/pressure shows an exponential rising inflection point. At this time, the data collection is considered to be completed. The slope of the initial section of the strain-stress curve corresponds to the compression modulus of this specimen, so that the compression modulus of each different target specimen is obtained.

According to some embodiments of this application, the separator 50 is a sponge base film.

It is hereby noted that the "sponge base film" may be understood as a thin film that assumes a sponge-like structure. As an example, the sponge base film may include at least one of glass fiber, nanofiber, polyethylene, polypropylene, or non-woven fabric.

According to some embodiments of this application, the separator 50 includes a sponge base film 14 and a coating 15. The coating 15 is formed on at least one side of the sponge base film 14. The capillary structure 13 is disposed in the sponge base film 14.

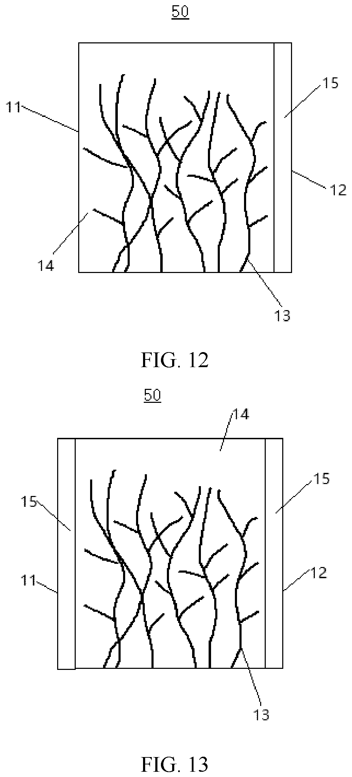

To further improve the safety performance of the battery 300, referring to FIG. 12 and FIG. 13, the separator 50 includes a sponge base film 14 and a coating 15. The coating 15 is formed on at least one side of the sponge base film 14. The capillary structure 13 is disposed in the sponge base film 14. As an example, referring to FIG. 12, the coating 15 is formed on one side of the sponge base film 14. The second pores 120 are disposed on the coating 15. The first pores 110 are disposed at one end of the sponge base film 11, the end being away from the coating 15. In this way, by using the sponge base film 14 containing the capillary structure 13, the separator 50 produces a more significant effect in retaining the electrolyte solution. In addition, one side of the sponge base film 14 is overlaid with the coating 15, and the coating 15 is provided with the second pores 120 as a negative end 12 of the separator 50, thereby making the separator 50 much more resistant to puncture and high temperature, and improving the safety performance of the battery 300.

According to some embodiments of this application, referring to FIG. 13, the coating 15 is formed on both sides of the sponge base film 14. The second pores 120 are disposed on the coating 15 located at the negative end 12, and the first pores 110 are disposed on the coating 15 located at the positive end 11. In this way, by using the sponge base film 14 containing the capillary structure 13, the separator 50 produces a more significant effect in retaining the electrolyte solution. In addition, both sides of the sponge base film 14 are overlaid with the coating 15, thereby making the separator 50 much more resistant to high temperature, and improving the safety performance of the battery 300.

According to some embodiments of this application, the coating 15 may include an inorganic particle coating or a gel electrolyte coating. As an example, the inorganic particles used in the inorganic particle coating may include one or more of boehmite (γ-AlOOH), aluminum oxide (A1₂O₃), barium sulfate (BaSO₄), magnesium oxide (MgO), magnesium hydroxide (Mg(OH)₂), silicon dioxide (SiO₂), tin dioxide (SnO₂), titanium oxide (TiO₂), calcium oxide (CaO), zinc oxide (ZnO), zirconium oxide (ZrO₂), yttrium oxide (Y₂O₃), nickel oxide (NiO), cerium oxide (CeO₂), zirconium titanium oxide (SrTiO₃), barium titanium oxide (BaTiO₃), or magnesium fluoride (MgF₂). Such inorganic particles produce a good inhibitory effect on the heat shrinkage of the separator 50, thereby making the separator 50 more resistant to high temperature and puncture. As an example, the gel electrolyte in the gel electrolyte coating may include polyvinylidene fluoride (PVDF), poly(vinylidene fluoride-co-hexafluoropropylene) [P(VDFHFP)], polyethylene oxide (PEO), polyacrylonitrile (PAN), polymethyl methacrylate (PMMA), and the like.

According to some embodiments of this application, the thickness of the inorganic particle coating is 0.5 µm to 8 µm, for example, 1 µm to 8 µm, 1.5 µm to 7.5 µm, 2 µm to 7 µm, 2.5 µm to 6.5 µm, 3 µm to 6 µm, 3.5 µm to 5.5 µm, or 4 µm to 5 µm. In this way, the separator 50 is more resistant to high temperature and puncture, thereby improving the safety performance of the battery 300.

According to some embodiments of this application, the thickness of the gel electrolyte coating is 5 µm to 15 µm, for example, 6 µm to 15 µm, 7 µm to 14 µm, 8 µm to 13 µm, 9 µm to 12 µm, or 10 µm to 11 µm. In this way, the separator 50 is more resistant to high temperature and puncture, thereby improving the safety performance of the battery 300.

According to some embodiments of this application, the inorganic particle coating and the gel electrolyte coating may further include a binder. As an example, the binder may be one or more of styrene-butadiene rubber (SBR), water-based acrylic resin (water-based acrylic resin), polyvinylidene difluoride (PVDF), polytetrafluoroethylene (PTFE), poly(ethylene-co-vinyl acetate) (EVA), polyacrylic acid (PAA), carboxymethyl cellulose (CMC), polyvinyl alcohol (PVA), or polyvinyl butyral (PVB).

According to some embodiments of this application, the inorganic particle coating and the gel electrolyte coating each may further include other organic compounds, for example, may include a heat-resistance-boosting polymer, a dispersant, a wetting agent, other types of binders, or the like. The type of the other organic compounds is not particularly limited herein, and may be any known material with good enhancement properties.

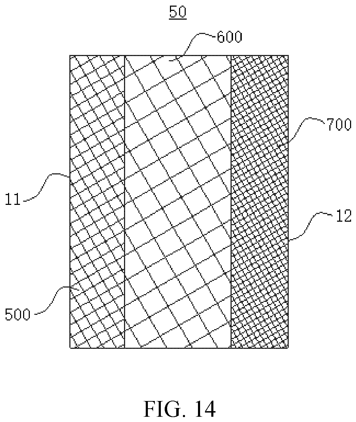

According to some embodiments of this application, referring to FIG. 14, the separator 50 includes a first separator 500, a middle separator 600, and a second separator 700 stacked along a thickness direction of the separator. The first pores 110 are disposed on the first separator 500, and the second pores 120 are disposed on the second separator 700. As an example, a pore diameter of the middle separator 600 is larger than the diameters of the first pores 110 or the diameters of the second pores 120; and/or, a porosity of the middle separator 600 is greater than a porosity of the first separator 500 or the second separator 700. In this way, the middle separator 600 with a relatively large pore diameter and/or a relatively high porosity can store a larger amount of electrolyte solution. When the negative current collector 20 expands in volume and squeezes the electrolyte solution between the negative current collector 20 and the separator 50, the electrolyte solution stored in the middle separator 600 can supplement the electrolyte solution between the negative current collector 20 and the separator 50 in time.

According to some embodiments of this application, the first separator 500, the middle separator 600, and the second separator 700 satisfy at least one of the following conditions:
the porosity of the first separator 500 is 30% to 70%;
the pore diameter of the middle separator 600 is 30 nm to 1 µm;
the porosity of the middle separator 600 is 40% to 90%; or
the porosity of the second separator 700 is 30% to 70%.

The pore diameter of the middle separator 600 is 30 nm to 1 µm, for example, 30 nm to 1 µm, 40 nm to 1 µm, 50 nm to 1 µm, 60 nm to 1 µm, 70 nm to 1 µm, 80 nm to 1 µm, 90 nm to 1 µm, 100 nm to 1 µm, 200 nm to 1 µm, 300 nm to 1 µm, 400 nm to 1 µm, 500 nm to 1 µm, 600 nm to 1 µm, 700 nm to 1 µm, 800 nm to 1 µm, or 900 nm to 1 µm. In this way, the middle separator 600 with a pore diameter falling within the above range can store a larger amount of electrolyte solution, and in turn, supplement the electrolyte solution between the negative current collector 20 and the separator 50 in time.

In some embodiments, the porosity of the first separator 500 is 30% to 70%, for example 35% to 70%, 40% to 70%, 45% to 70%, 50% to 70%, 55% to 70%, 60% to 70%, or 65% to 70%; the porosity of the middle separator 600 is 40% to 90%, for example 45% to 90%, 50% to 90%, 55% to 90%, 60% to 90%, 65% to 90%, 70% to 90%, 75% to 90%, 80% to 90%, or 85% to 90%; and the porosity of the second separator 700 is 30% to 70%, for example 35% to 70%, 40% to 70%, 45% to 70%, 50% to 70%, 55% to 70%, 60% to 70%, or 65% to 70%. In this way, the middle separator 600 with a porosity falling within the above range can store a larger amount of electrolyte solution, and in turn, supplement the electrolyte solution between the negative current collector 20 and the separator 50 in time.

According to some embodiments of this application, the porosities of the first separator 500, the middle separator 600, and the second separator 700 may be determined by a gas displacement method. Specifically, the porosity may be determined with reference to the standard GB/T24586-2009 according to the following steps: immersing the separator in ethyl methyl carbonate (EMC) for cleaning, and then determining the porosity by the gas displacement method. The percentage of the pore volume of all pores in the separator in relation to the total volume of the separator is the porosity of the separator, calculated as: porosity = (V - V₀)/V × 100 %, where V₀ is a true volume and V is an apparent volume.

According to some embodiments of this application, this application further provides a battery cell 200. The battery cell includes the electrode assembly 100 disclosed in the above embodiment. The battery cell 200 may further include a shell 201. The electrode assembly 100 is mounted in the shell 201.

According to some embodiments of this application, this application further provides a battery 300. The battery includes the battery cell 200 disclosed in the above embodiment. The battery 300 may further include a box 301. The battery cell 200 is mounted in the box 301.

According to some embodiments of this application, this application further provides an electrical device 400. The electrical device includes the battery 300 disclosed in the above embodiment. The battery 300 is configured to provide electrical energy for the electrical device 400.

According to some embodiments of this application, referring to FIG. 4, this application provides an electrode assembly 100. The electrode assembly 100 includes a separator 50, a positive electrode plate 10, and a negative current collector 20. The separator 50, the positive electrode plate 10, and the negative current collector 20 are stacked along a first direction. The positive electrode plate 10 and the negative current collector 20 are interspaced with the separator 50. The separator 50 separates the positive electrode plate 10 from the negative current collector 20. The negative current collector 20 includes a substrate assembly 30. The substrate assembly 30 includes an elastic layer 32 and a plurality of substrate layers 31. The plurality of substrate layers 31 are stacked along the first direction. Two adjacent substrate layers 31 are interspaced with the elastic layer 32.

The electrode assembly 100 in the embodiment of FIG. 4 differs from the electrode assembly 100 in FIG. 5 in that the outer surface of the negative current collector 20 in FIG. 4 is overlaid with no negative active material layer 40, but the outer surface of the negative current collector 20 in FIG. 5 is overlaid with a negative active material layer 40. The substrate assembly 30 in the embodiment in FIG. 6 differs from the substrate assembly 30 in FIG. 7 in that the substrate layer 31 is disposed on one side of the elastic layer 32 of the substrate assembly 30 in the embodiment in FIG. 6, but the substrate layer 31 is disposed on both sides of the elastic layer 32 of the substrate assembly 30 in the embodiment in FIG. 7, and the elastic layer 32 is disposed between the two substrate layers 31. The substrate assembly 30 in the embodiment in FIG. 7 differs from the substrate assembly 30 in FIG. 8 in that the outer surface of the substrate assembly 30 in FIG. 8 is overlaid with a negative active material layer 40.

It is hereby noted that to the extent that no conflict occurs, the embodiments of this application and the features in the embodiments may be combined with each other.

What is described above is merely exemplary embodiments of this application, but is not intended to limit this application. To a person skilled in the art, various modifications and variations may be made to this application. Any and all modifications, equivalent replacements, improvements, and the like made without departing from the spirit and principles of this application still fall within the protection scope of this application.

## Claims

1. An electrode assembly, **characterized in that** the electrode assembly comprises:
a positive electrode plate and a negative current collector, wherein the positive electrode plate and the negative current collector are stacked along a first direction, at least one of the positive electrode plate or the negative current collector comprises a substrate assembly, the substrate assembly comprises a substrate layer and an elastic layer, and the substrate layer and the corresponding elastic layer are stacked along the first direction.

2. The electrode assembly according to claim 1, **characterized in that**, along the first direction, the elastic layer is disposed on at least one side of the substrate layer.

3. The electrode assembly according to claim 1, **characterized in that** the substrate assembly comprises a plurality of substrate layers, the plurality of substrate layers are stacked along the first direction, and the elastic layer is disposed between at least two adjacent substrate layers.

4. The electrode assembly according to any one of claims 1 to 3, **characterized in that** the elastic layer is connected to the adjacent substrate layer.

5. The electrode assembly according to claim 4, **characterized in that** the elastic layer is bonded and fixed to the adjacent substrate layer.

6. The electrode assembly according to any one of claims 1 to 5, **characterized in that**, along the first direction, the substrate layer comprises a first surface, the elastic layer comprises a second surface, and the first surface abuts the corresponding second surface.

7. The electrode assembly according to claim 6, **characterized in that** both the first surface and the second surface are formed into flat surfaces.

8. The electrode assembly according to any one of claims 1 to 7, **characterized in that**, along the first direction, an orthographic projection of the substrate layer lies within an orthographic projection of the elastic layer.

9. The electrode assembly according to any one of claims 1 to 8, **characterized in that** an outer surface of the negative current collector is overlaid with a negative active material layer.

10. The electrode assembly according to any one of claims 1 to 9, **characterized in that** the elastic layer is a polymer.

11. The electrode assembly according to any one of claims 1 to 10, **characterized in that** a thickness of the substrate layer is 5% to 80% of a total thickness of the substrate assembly, and a thickness of the elastic layer is 20% to 95% of the total thickness of the substrate assembly.

12. The electrode assembly according to any one of claims 1 to 11, **characterized in that** an initial thickness of the elastic layer is D₁, and a thickness of the elastic layer that is compressed is D₂, satisfying: 0.1 ≤ 1 - D₂/D₁ ≤ 0.95.

13. The electrode assembly according to any one of claims 1 to 12, **characterized in that** the elastic layer comprises a weight-reducing structure.

14. The electrode assembly according to claim 13, **characterized in that** the weight-reducing structure is a weight-reducing hole and/or a weight-reducing groove.

15. The electrode assembly according to any one of claims 1 to 14, **characterized in that** the electrode assembly further comprises: a separator, wherein the separator is disposed between the positive electrode plate and the negative current collector to separate the positive electrode plate from the negative current collector.

16. The electrode assembly according to claim 15, **characterized in that**, in a thickness direction of the separator, the separator comprises a positive end and a negative end, the positive end is disposed near the positive electrode plate, the negative end is disposed near the negative current collector, the positive end is provided with a plurality of first pores, the negative end is provided with a plurality of second pores, and diameters of the first pores are larger than diameters of the second pores.

17. The electrode assembly according to claim 16, **characterized in that** the diameters of the first pores are 20 nm to 1000 µm, and preferably 50 nm to 500 µm.

18. The electrode assembly according to claim 16, **characterized in that** the diameters of the second pores are 20 nm to 500 µm, and preferably 50 nm to 100 µm.

19. The electrode assembly according to claim 16, **characterized in that** the diameters of the pores in the separator increase stepwise along a direction from the negative end to the positive end.

20. The electrode assembly according to claim 16, **characterized in that** a capillary structure is disposed inside the separator along a height direction of the separator, and one end of the capillary structure is flush with a lowest end of the separator.

21. The electrode assembly according to claim 20, **characterized in that** a length H₁ of the capillary structure is greater than or equal to 70%H₂, wherein H₂ is a height of the separator.

22. The electrode assembly according to claim 15, **characterized in that** a compression modulus of the separator is 5% to 95%.

23. The electrode assembly according to claim 15, **characterized in that** the separator is a sponge base film.

24. The electrode assembly according to claim 20, **characterized in that** the separator comprises a sponge base film and a coating, the coating is formed on at least one side of the sponge base film, and the capillary structure is disposed in the sponge base film.

25. The electrode assembly according to claim 24, **characterized in that** the sponge base film comprises at least one of glass fiber, nanofiber, polyethylene, polypropylene, or non-woven fabric.

26. The electrode assembly according to claim 25, **characterized in that** the coating is formed on one side of the sponge base film, the second pores are disposed on the coating, and the first pores are disposed at one end of the sponge base film, the end being away from the coating.

27. The electrode assembly according to claim 25, **characterized in that** the coating is formed on both sides of the sponge base film, the second pores are disposed on the coating located at the negative end, and the first pores are disposed on the coating located at the positive end.

28. The electrode assembly according to claim 16, **characterized in that** the separator comprises a first separator, a middle separator, and a second separator stacked along a thickness direction of the separator, the first pores are disposed on the first separator, and the second pores are disposed on the second separator.

29. The electrode assembly according to claim 28, **characterized in that** a pore diameter of the middle separator is larger than the diameters of the first pores or the diameters of the second pores; and/or
a porosity of the middle separator is greater than a porosity of the first separator or the second separator.

30. The electrode assembly according to claim 29, **characterized in that** the first separator, the middle separator, and the second separator satisfy at least one of the following conditions:
the porosity of the first separator is 30% to 70%;
the pore diameter of the middle separator is 30 nm to 1 µm;
the porosity of the middle separator is 40% to 90%; or
the porosity of the second separator is 30% to 70%.

31. A battery cell, **characterized in that** the battery cell comprises the electrode assembly according to any one of claims 1 to 30.

32. A battery, **characterized in that** the battery comprises the battery cell according to claim 31.

33. An electrical device, **characterized in that** the electrical device comprises the battery according to claim 32.
